# FASCICULE DE BREVET EUROPEEN

(11) **EP 1 761 009 B1**
(45) Date de publication et mention de la délivrance du brevet: **05.01.2011**
(21) Numéro de dépôt: 06017982.7
(22) Date de dépôt: 29.08.2006
(51) Int. Cl.: H04M 1/725, H04M 1/19

(54) **Système de transaction par communication radio en champ proche**
Transaktionssystem, das Kurzstrecken-Radiokommunikation benutzt
Transaction system using short-range radio communication

(30) Priorité: 31.08.2005 FR 0508898
(43) Date de publication de la demande: 07.03.2007
(73) Titulaire: SAGEM MOBILES, 75015 Paris (FR)
(72) Inventeur: Marchadier, Bruno, 75008 Paris (FR)
(74) Mandataire: Maillet, Alain

(56) Documents cités:
- DE-A1- 10 257 677
- US-A- 5 671 267
- US-A1- 2004 204 074
- US-A1- 2004 219 881

## Description

La présente invention concerne un système de transaction par communication radio en champ proche. L'invention concerne aussi un terminal de transaction ainsi qu'un terminal mobile inclus dans un tel système. L'invention concerne également des procédés de commande de tels terminaux.

Elle trouve application dans le domaine des transactions par ondes radio et, en particulier, dans le domaine des transactions par communication radio en champ proche.

La technologie de communication radio en champ proche (NFC: Near Field Communication en Anglais) permet de faire communiquer un terminal de transaction avec un terminal mobile. Le terminal de transaction comporte des moyens de communication radio en champ proche et peut être une borne d'achat, par exemple un distributeur de tickets, ou un portillon de transport en commun, par exemple un tourniquet de métro. Le terminal mobile qui peut être du type téléphone portable, comprend des moyens de communication radio en champ proche. Ces moyens sont généralement constitués d'une carte sur laquelle sont implantées une puce NFC ainsi qu'une antenne.

La technologie NFC permet d'échanger des données entre le terminal de transaction et le terminal mobile lorsque ceux-ci sont à une distance de l'ordre de quelques centimètres l'un de l'autre. Le terminal de transaction comprend, à cet effet, un émetteur radiofréquence qui transmet la puissance nécessaire à la puce NFC pour son fonctionnement lors de la transaction. Lorsqu'un utilisateur désire réaliser une transaction NFC, il approche son terminal mobile près du terminal de transaction. Une communication s'établit alors, selon un protocole déterminé, entre les deux terminaux, à l'issue de laquelle la transaction est effectuée. La transaction peut prendre la forme d'un paiement, comme par exemple, le débit d'une certaine somme d'argent à partir d'un compte associé au terminal mobile, ou d'une validation, comme par exemple, la reconnaissance de la validité d'un titre de transport associé au terminal mobile.

Le document US 2004/0204074 décrit un système comprenant une console et un téléphone mobile qui peut se connecter sur la console ou entrer en communication radio en champ proche avec celle ci.

Si le terminal de transaction est une borne de distribution de tickets, l'utilisateur sélectionne le type de tickets qu'il veut se voir délivrer et il valide la sélection et le paiement en approchant son terminal mobile près de la borne de distribution.

Si le terminal de transaction est un tourniquet de métro, l'utilisateur fait valider son titre de transport en approchant son terminal mobile près du tourniquet.

Au cours de la transaction, des signaux sonores peuvent être émis par le terminal de transaction. En particulier, la fin de la transaction est signalée par un signal sonore émis par le terminal de transaction pour avertir l'utilisateur que la transaction est terminée et qu'il peut reprendre son terminal mobile.

Du fait de la taille réduite des terminaux mobiles et, en particulier, des téléphones portables, ces signaux sonores sont émis à faible distance des micros de ces téléphones portables.

Si lors de la transaction, le téléphone portable n'est pas utilisé, c'est-à-dire si l'utilisateur n'est pas en communication avec un correspondant, les signaux sonores ne sont pas perturbants pour ce dernier.

Par contre, si lors de la transaction, le téléphone portable est utilisé, c'est-à-dire si l'utilisateur est en communication avec un correspondant, les signaux sonores sont perturbants pour ce dernier. En effet, les signaux sonores émis sont transmis par le micro du téléphone portable jusqu'à l'écouteur du correspondant qui reçoit ainsi un signal sonore très bruyant.

Un objet de la présente invention est de proposer un système de transaction par communication radio en champ proche qui ne présente pas les inconvénients de l'état de la technique et qui, en particulier, évite que le correspondant de l'utilisateur du terminal mobile reçoive des signaux sonores trop bruyants lors d'une transaction NFC.

A cet effet, est proposé un système de transaction par communication radio en champ proche comprenant:
- un terminal de transaction comprenant des moyens de communication radio en champ proche et un haut-parleur;
- un terminal mobile du type comprenant des moyens de communication radio en champ proche, un micro et un module d'émission adapté à transmettre les signaux sonores captés par le micro à un correspondant.

Le système de transaction par communication radio en champ proche est tel que, lors d'une transaction NFC entre le terminal de transaction et le terminal mobile, le terminal de transaction est adapté pour empêcher l'émission de signaux sonores à partir du haut-parleur ou pour limiter le volume des signaux sonores émis par le haut-parleur, et/ou le terminal mobile est adapté pour empêcher l'émission par le module d'émission, à destination du correspondant, des signaux sonores captés par le micro, ou pour limiter le volume des signaux sonores captés par le micro et émis par le module d'émission à destination du correspondant.

L'invention propose également un terminal de transaction comprenant un haut-parleur et des moyens de communication radio en champ proche;

le terminal de transaction étant adapté à entrer en communication radio en champ proche avec un terminal mobile du type comprenant des moyens de communication radio en champ proche, un micro et un module d'émission adapté à transmettre les signaux sonores captés par le micro à un correspondant;

le terminal de transaction étant tel qu'il comprend des moyens de limitation qui, lors d'une transaction NFC avec le terminal mobile, sont adaptés pour empêcher l'émission de signaux sonores à partir du haut-parleur ou pour limiter le volume des signaux sonores émis par le haut-parleur.

L'invention propose également un procédé de commande d'un terminal de transaction selon l'objet précédent, le procédé comprenant:
- une étape d'attente;
- une étape de passage en mode communication NFC;
- une étape de passage en mode silencieux;
- une étape de transaction;
- une étape de fin de transaction; et
- une étape de retour en mode normal.

Dans un mode particulier de l'invention, l'étape de transaction et l'étape de fin de transaction sont remplacées par une étape de temporisation.

L'invention propose également un terminal mobile du type comprenant des moyens de communication radio en champ proche, un micro et un module d'émission adapté à transmettre les signaux sonores captés par le micro à un correspondant;
le terminal mobile étant adapté à entrer en communication radio en champ proche avec un terminal de transaction comprenant des moyens de communication radio en champ proche et un haut-parleur;
le terminal mobile étant tel qu'il comprend des moyens de limitation qui, lors d'une transaction NFC avec le terminal de transaction, sont adaptés pour empêcher l'émission par le module d'émission, à destination du correspondant, des signaux sonores captés par le micro, ou pour limiter le volume des signaux sonores captés par le micro et émis par le module d'émission à destination du correspondant.

Avantageusement, les moyens de limitation comprennent un module de commande et un régulateur de volume disposé entre le micro et le module d'émission et commandé par le module de commande.

Selon un mode de réalisation particulier, le régulateur de volume est un interrupteur à deux positions.

Selon un mode de réalisation particulier, le régulateur de volume est un variateur de volume.

L'invention propose également un procédé de commande du terminal mobile selon l'un des objets précédents, le procédé comprenant:
- une étape d'attente;
- une étape de passage en mode communication NFC;
- une étape de passage en mode silencieux;
- une étape de transaction;
- une étape de fin de transaction; et
- une étape de retour en mode normal.

Dans un mode particulier de l'invention, l'étape de transaction et l'étape de fin de transaction sont remplacées par une étape de temporisation.

Avantageusement, la durée de la temporisation est réglée par l'utilisateur à partir d'une option du terminal mobile.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 est une représentation schématique d'un système de transaction par communication radio en champ proche selon l'invention;
la Fig. 2a représente le schéma bloc d'un terminal mobile;
la Fig. 2b représente le schéma bloc d'un terminal mobile selon un autre mode de réalisation;
la Fig. 3 est un algorithme de commande d'un terminal de transaction; et
la Fig. 4 est un algorithme de commande d'un terminal mobile.

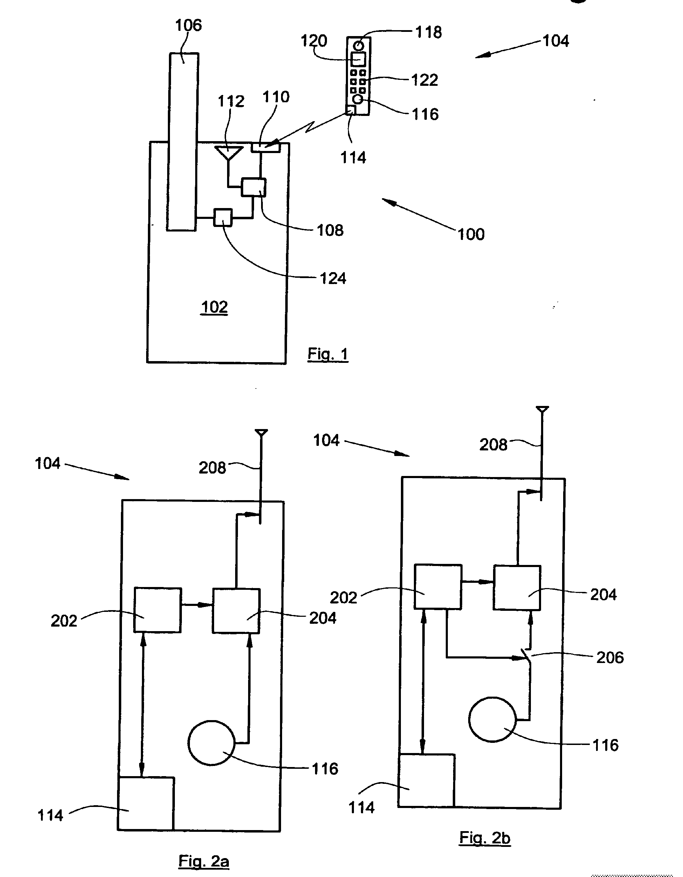

La Fig. 1 représente un système de transaction par communication radio en champ proche 100 (NFC) comprenant un terminal de transaction 102 et un terminal mobile 104.

Dans le mode de réalisation de l'invention représenté à la Fig. 1, le terminal de transaction 102 est un tourniquet de métro comprenant une porte 106 qui se ferme lorsqu'un utilisateur présente un titre de transport non valide et qui s'ouvre lorsque le titre de transport présenté est valide. Le terminal de transaction 102 comprend un émetteur radiofréquence 110 qui lui permet d'entrer en communication avec un terminal mobile NFC.

Le terminal mobile 104 prend ici la forme d'un téléphone portable comprenant un écran 120, des touches 122, un écouteur 118 et un micro 116. Le téléphone portable 104 comprend également une puce NFC 114 qui lui permet d'entrer en communication avec l'émetteur radiofréquence 110 du terminal de transaction 102.

Le terminal de transaction 102 comprend également une unité de commande 108 et un haut-parleur 112. L'unité de commande 108 est reliée à l'émetteur radiofréquence 110 et au haut-parleur 112 et elle contient les instructions nécessaires à la commande de l'émetteur radiofréquence 110 et du haut-parleur 112. Ainsi, lorsque la présence de la puce NFC 114 est détectée, l'unité de commande 108 déroule le protocole nécessaire à l'établissement d'une communication entre l'émetteur radiofréquence 110 et la puce NFC 114, et elle récupère les données transmises par cette dernière. Lorsque la transaction est terminée, l'unité de commande 108 commande le haut-parleur 112 afin que celui-ci émette un signal sonore représentatif de la réussite ou de l'échec de la transaction.

Dans le mode de réalisation de l'invention représenté sur la Fig. 1, l'unité de commande 108 est également reliée à un dispositif de gestion de la porte 124 qui déplace la porte 106 lorsque la transaction a réussi.

La Fig. 2a représente le schéma bloc du terminal mobile 104 selon un premier mode de réalisation.

Le terminal mobile 104 comprend un module de commande 202, un module d'émission 204 relié à une antenne 208, le micro 116 et la puce NFC 114.

Le micro 116 transfère les signaux sonores qu'il perçoit au module d'émission 204 qui les émet par l'intermédiaire de l'antenne 208 vers le correspondant. Le module de commande 202 contient les instructions nécessaires à la gestion de la puce NFC 114 et au module d'émission 204.

La Fig. 2b représente le schéma bloc du terminal mobile 104 selon un deuxième mode de réalisation.

Le terminal mobile 104 comprend le module de commande 202, le module d'émission 204 relié à l'antenne 208, le micro 116 et la puce NFC 114. Le terminal mobile 104 comprend également un régulateur de volume 206 disposé entre le micro 116 et le module d'émission 204 et commandé par le module de commande 202.

Comme pour le premier mode de réalisation décrit ci-dessus, le micro 116 transfère les signaux sonores qu'il perçoit au module d'émission 204 qui les module et les émet par l'intermédiaire de l'antenne 208 vers le correspondant. Le module de commande 202 contient les instructions nécessaires à la gestion de la puce NFC 114 et au module d'émission 204.

Le module de commande 202 contient également les instructions nécessaires à la commande du régulateur de volume 206.

Le régulateur de volume 206 peut être un interrupteur à deux positions, c'est-à-dire que, soit les signaux sonores perçus par le micro 116 sont transférés au module d'émission 204, soit ils ne le sont pas. Le régulateur de volume 206 peut aussi être un variateur de volume qui réduit le volume sonore à un niveau acceptable pour le correspondant mais sans interrompre totalement l'émission des signaux sonores.

La solution envisagée par l'invention, pour éviter que le correspondant reçoive les signaux sonores émis lors de la transaction, consiste à agir soit sur le terminal de transaction 102 en empêchant l'émission des signaux sonores par le haut-parleur 112 ou en limitant le volume des signaux sonores émis par le haut-parleur 112, soit sur le terminal mobile 104 en empêchant le transfert des signaux sonores par le micro 116 au module d'émission 204 ou en limitant le volume des signaux sonores transmis par le micro 116 au module d'émission 204. Il est également possible d'agir à la fois sur le terminal de transaction 102 et sur le terminal mobile 104. Il est alors possible que les deux terminaux 102 et 104 agissent de concert de manière à ce que les deux terminaux passent en mode silencieux ou de manière à ce que l'un des deux, uniquement, passe en mode silencieux. Ce choix peut être laissé à l'utilisateur du terminal mobile au travers d'une option de ce terminal mobile et ce choix peut être transmis au terminal de transaction lors de l'initialisation de la communication NFC.

Ainsi le système de transaction par communication radio en champ proche 100 comprend:
- le terminal de transaction 102 comprenant les moyens de communication radio en champ proche 110 et le haut-parleur 112;
- le terminal mobile 104 du type comprenant des moyens de communication radio en champ proche 114, le micro 116 et le module d'émission 204 adapté à transmettre les signaux sonores captés par le micro 116 au correspondant; et
le système de transaction par communication radio en champ proche 100 est tel que, lors d'une transaction NFC entre le terminal de transaction 102 et le terminal mobile 104, le terminal de transaction 102 est adapté pour empêcher l'émission de signaux sonores à partir du haut-parleur 112 ou pour limiter le volume des signaux sonores émis par le haut-parleur 112, et/ou le terminal mobile 104 est adapté pour empêcher l'émission par le module d'émission 204, à destination du correspondant, des signaux sonores captés par le micro 116, ou pour limiter le volume des signaux sonores captés par le micro 116 et émis par le module d'émission 204 à destination du correspondant. Ainsi, les signaux sonores reçus par le correspondant restent à un niveau sonore supportable.

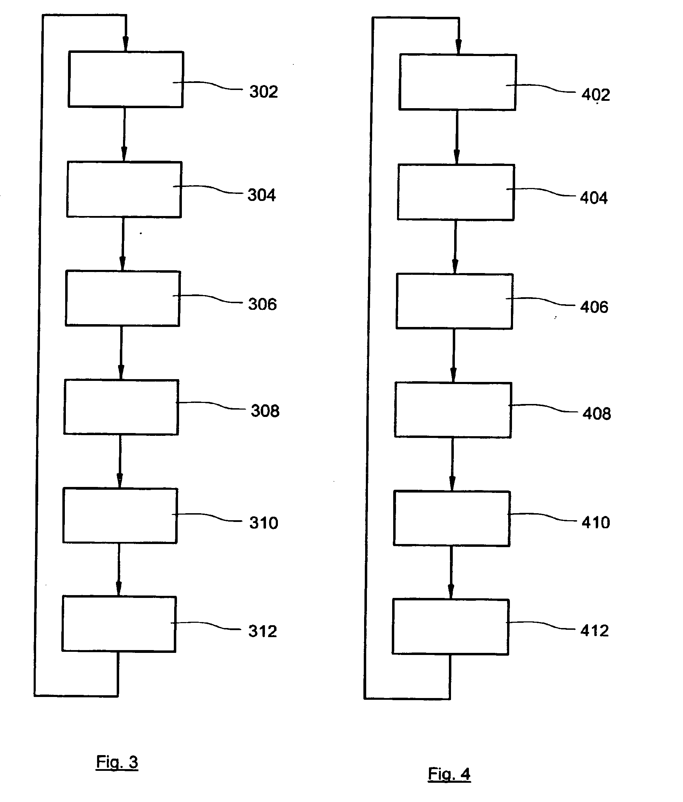

La Fig. 3 représente l'algorithme de commande du terminal de transaction 102 lorsque les signaux sonores de la transaction ne doivent pas être générés par le haut-parleur 112 ou lorsque leur volume doit être limité, c'est-à-dire lorsque le terminal mobile 104 est un terminal mobile selon le premier mode de réalisation (Fig. 2a).

Le procédé de commande du terminal de transaction 102 comprend:
- une étape d'attente 302;
- une étape de passage en mode communication NFC 304;
- une étape de passage en mode silencieux 306;
- une étape de transaction 308;
- une étape de fin de transaction 310; et
- une étape de retour en mode normal 312.

Au cours de l'étape d'attente 302, l'unité de commande 108 attend qu'une puce NFC 114 soit présentée devant l'émetteur radiofréquence 110.

Lorsque la puce NFC 114 est détectée, le procédé se poursuit par l'étape de passage en mode communication NFC 304 où l'unité de commande 108 commence à dialoguer avec la puce NFC 114 par l'intermédiaire de l'émetteur radiofréquence 110 afin d'établir la communication.

Après le commencement de ce dialogue et avant toute émission de signal sonore, le procédé se poursuit par l'étape de passage en mode silencieux 306 au cours de laquelle l'unité de commande 108 empêche toute émission d'un signal sonore par le haut-parleur 112 ou limite le volume sonore des signaux sonores générés par le haut-parleur 112.

Le procédé se poursuit alors par l'étape de transaction 308 au cours de laquelle la transaction est réalisée.

Le procédé se poursuit alors par l'étape de fin de transaction 310, qui correspond à la fin de la communication, et le procédé se termine par l'étape de retour en mode normal 312 puis de retour à l'étape d'attente 302.

L'étape de transaction 308 et l'étape de fin de transaction 310 peuvent être remplacées par une étape de temporisation dont la durée est calculée en fonction de la durée nécessaire à la transaction et de la durée nécessaire à la libération de la communication qui ont lieu au cours de cette étape de temporisation.

La Fig. 4 représente l'algorithme de commande du terminal mobile 104 lorsque les signaux sonores émis lors de la transaction par le haut-parleur 112 ne doivent pas être transmis au module d'émission 204 ou lorsque leur volume doit être limité, c'est-à-dire lorsque le terminal mobile 104 est un terminal mobile selon le deuxième mode de réalisation (Fig. 2b).

Le procédé de commande du terminal mobile 104 comprend:
- une étape d'attente 402;
- une étape de passage en mode communication NFC 404;
- une étape de passage en mode silencieux 406;
- une étape de transaction 408;
- une étape de fin de transaction 410; et
- une étape de retour en mode normal 412.

Au cours de l'étape d'attente 402, le module de commande 202 attend que la présence de la puce NFC 114 soit détectée par l'émetteur radiofréquence 110.

Lorsque la puce NFC 114 est détectée, le procédé se poursuit par l'étape de passage en mode communication NFC 404 où l'unité de commande 108 commence à dialoguer avec la puce NFC 114 par l'intermédiaire de l'émetteur radiofréquence 110 afin d'établir la communication.

Après le commencement de ce dialogue et avant toute émission de signal sonore, le procédé se poursuit par l'étape de passage en mode silencieux 406 au cours de laquelle le module de commande 202 empêche le transfert des signaux reçus par le micro 116 vers le module d'émission 204 par l'ouverture de l'interrupteur 206 ou limite leur volume sonore par réglage du variateur de volume 206.

Le procédé se poursuit alors par l'étape de transaction 408 au cours de laquelle la transaction est réalisée.

Le procédé se poursuit alors par l'étape de fin de transaction 410, qui correspond à la fin de la communication, et le procédé se termine par l'étape de retour en mode normal 412 puis de retour à l'étape d'attente 402.

L'étape de transaction 408 et l'étape de fin de transaction 410 peuvent être remplacées par une étape de temporisation dont la durée est calculée en fonction de la durée nécessaire à la transaction et de la durée nécessaire à la libération de la communication qui ont lieu au cours de cette étape de temporisation ou réglées par l'utilisateur à partir d'une option de son terminal mobile 104.

Ainsi, quel que soit le mode de réalisation, les signaux sonores ne sont pas transmis au correspondant ou leur volume est suffisamment réduit pour ne pas l'incommoder.

Bien entendu, la présente invention n'est pas limitée aux exemples et modes de réalisation décrits et représentés, mais elle est susceptible de nombreuses variantes accessibles à l'homme de l'art.

Par exemple, l'invention a été plus particulièrement décrite dans le cas où le module de commande agit sur un régulateur de volume, mais le module de commande peut agir directement sur le module d'émission pour le bloquer et empêcher toute émission à partir du module d'émission.

## Revendications

1. Système de transaction par communication radio en champ proche (Near Field Communication : NFC) (100) comprenant :
- un terminal de transaction (102) comprenant des moyens de communication radio en champ proche (110) et un haut-parleur (112),
- un terminal mobile (104) du type comprenant des moyens de communication radio en champ proche (114), un microphone (116) et un module d'émission (204) adapté à transmettre les signaux sonores captés par le microphone (116) à un correspondant,
le système de transaction par communication radio en champ proche (100) étant **caractérisé en ce que**, lors d'une transaction NFC entre le terminal de transaction (102) et le terminal mobile (104), le terminal de transaction (102) est adapté pour empêcher l'émission de signaux sonores générés par la transaction NFC à partir du haut-parleur (112) ou pour limiter le volume des signaux sonores générés par la transaction NFC à partir du haut-parleur (112), et/ou le terminal mobile (104) est adapté pour empêcher l'émission par le module d'émission (204), à destination du correspondant, des signaux sonores générés par la transaction NFC à partir du haut-parleur (112) et captés par le microphone (116), ou pour limiter le volume des signaux sonores générés par la transaction NFC à partir du haut-parleur (112) captés par le microphone (116) et émis par le module d'émission (204) à destination du correspondant.

2. Terminal de transaction (102) comprenant un haut-parleur (112) et des moyens de communication radio en champ proche (110),
le terminal de transaction (102) étant adapté à entrer en communication radio en champ proche avec un terminal mobile (104) du type comprenant des moyens de communication radio en champ proche (114), un microphone (116) et un module d'émission (204) adapté à transmettre les signaux sonores captés par le microphone (116) à un correspondant,
le terminal de transaction (102) étant **caractérisé en ce qu'**il comprend des moyens de limitation (108) qui, lors d'une transaction NFC avec le terminal mobile (104), sont adaptés pour empêcher l'émission de signaux sonores générés par la transaction NFC à partir du haut-parleur (112) ou pour limiter le volume des signaux sonores générés par la transaction NFC à partir du haut-parleur (112).

3. Terminal mobile (104) du type comprenant des moyens de communication radio en champ proche (114), un microphone (116) et un module d'émission (204) adapté à transmettre les signaux sonores captés par le microphone (116) à un correspondant,
le terminal mobile (104) étant adapté à entrer en communication radio en champ proche avec un terminal de transaction (102) comprenant des moyens de communication radio en champ proche (110) et un haut-parleur (112),
le terminal mobile (104) étant **caractérisé en ce qu'**il comprend des moyens de limitation (202, 206) qui, lors d'une transaction NFC avec le terminal de transaction (102), sont adaptés pour empêcher l'émission par le module d'émission (204), à destination du correspondant, des signaux sonores générés par la transaction NFC à partir du haut-parleur (112) et captés par le microphone (116), ou pour limiter le volume des signaux sonores générés par la transaction NFC à partir du haut-parleur (112) captés par le microphone (116) et émis par le module d'émission (204) à destination du correspondant.

4. Terminal mobile (104) selon la revendication 3, **caractérisé en ce que** les moyens de limitation comprennent un module de commande (202) et un régulateur de volume (206) disposé entre le microphone (116) et le module d'émission (204) et commandé par le module de commande (202).

5. Terminal mobile (104) selon la revendication 4, **caractérisé en ce que** le régulateur de volume (206) est un interrupteur à deux positions.

6. Terminal mobile (104) selon la revendication 4, **caractérisé en ce que** le régulateur de volume (206) est un variateur de volume.

7. Procédé de commande d'un terminal de transaction (102) selon la revendication 2, le procédé comprenant :
- une étape d'attente (302),
- une étape de passage en mode communication NFC (304) avec un terminal mobile (104) du type comprenant des moyens de communication radio en champ proche (114), un microphone (116) et un module d'émission (204) adapté à transmettre les signaux sonores captés par le microphone (116) à un correspondant,
- une étape de passage en mode silencieux (306) au cours de laquelle le terminal de transaction (102) empêche l'émission de signaux sonores générés par la transaction NFC à partir du haut-parleur (112) ou limite le volume des signaux sonores générés par la transaction NFC à partir du haut-parleur (112),
- une étape de transaction (308),
- une étape de fin de transaction (310), et
- une étape de retour en mode normal (312).

8. Procédé de commande selon la revendication 7, dans lequel l'étape de transaction (308) et l'étape de fin de transaction (310) sont remplacées par une étape de temporisation.

9. Procédé de commande du terminal mobile (104) selon l'une des revendications 3 à 6, le procédé comprenant :
- une étape d'attente (402),
- une étape de passage en mode communication NFC (404) avec un terminal de transaction (102) comprenant des moyens de communication radio en champ proche (110) et un haut-parleur (112),
- une étape de passage en mode silencieux (406) au cours de laquelle le terminal mobile (104) empêche l'émission par le module d'émission (204), à destination du correspondant, des signaux sonores générés par la transaction NFC à partir du haut-parleur (112) et captés par le microphone (116), ou limite le volume des signaux sonores générés par la transaction NFC à partir du haut-parleur (112) captés par le microphone (116) et émis par le module d'émission (204) à destination du correspondant,
- une étape de transaction (408),
- une étape de fin de transaction (410), et
- une étape de retour en mode normal (412).

10. Procédé de commande selon la revendication 9, dans lequel l'étape de transaction (408) et l'étape de fin de transaction (410) sont remplacées par une étape de temporisation.

11. Procédé de commande selon la revendication 10, **caractérisé en ce que** la durée de la temporisation est réglée par l'utilisateur à partir d'une option du terminal mobile (104).

## Claims

1. Transaction system by short range radio communication (Near Field Communication: NFC) (100) comprising:
- a transaction terminal (102) comprising near field radio communication means (110) and a speaker (112),
- a mobile terminal (104) of the type comprising near field radio communication means (114), a microphone (116) and a transmission module (204) adapted to transmit the sound signals picked up by the microphone (116) to a called party,
the transaction system by near field radio communication means (100) being **characterised in that** during an NFC transaction between the transaction terminal (102) and the mobile terminal (104), the transaction terminal (102) is adapted to prevent the transmission of sound signals generated by the NFC transaction from the speaker (112) or to limit the volume of the sound signals generated by the NFC transaction from the speaker (112), and/or the mobile terminal (104) is adapted to prevent the transmission by the transmission module (204), to the called party, of sound signals generated by the NFC transaction from the speaker (112) and picked up by the microphone (116), or to limit the volume of the sound signals generated by the NFC transaction from the speaker (112), picked up by the microphone (116) and transmitted by the transmission module (204) to the called party.

2. Transaction terminal (102) comprising a speaker (112) and near field radio communication means (110),
the transaction terminal (102) being adapted to enter into near field radio communication with a mobile terminal (104) of the type comprising near field radio communication means (114), a microphone (116) and a transmission module (204) adapted to transmit the sound signals picked up by the microphone (116) to a called party,
the transaction terminal (102) being **characterised in that** it comprises limiting means (108) which, during an NFC transaction with the mobile terminal (104), are adapted to prevent the transmission of sound signals generated by the NFC transaction from the speaker (112) or to limit the volume of the sound signals generated by the NFC transaction from the speaker (112).

3. Mobile terminal (104) of the type comprising near field radio communication means (114), a microphone (116) and a transmission module (204) adapted to transmit the sound signals picked up by the microphone (116) to a called party,
the mobile terminal (104) being adapted to enter into near field radio communication with a transaction terminal (102) comprising near field radio communication means (110) and a speaker (112),
the mobile terminal (104) being **characterised in that** it comprises limiting means (202, 206) which, during an NFC transaction with the transaction terminal (102), are adapted to prevent the transmission, by the transmission module (204), to the called party, of sound signals generated by the NFC transaction from the speaker (112) and picked up by the microphone (116), or to limit the volume of the sound signals generated by the NFC transaction from the speaker (112) picked up by the microphone (116) and transmitted by the transmission module (204) to the called party.

4. Mobile terminal (104) according to claim 3, **characterised in that** the limiting means comprise a control module (202) and a volume regulator (206) disposed between the microphone (116) and the transmission module (204) and controlled by the control module (202).

5. Mobile terminal (104) according to claim 4, **characterised in that** the volume regulator (206) is a two-position switch.

6. Mobile terminal (104) according to claim 4, **characterised in that** the volume regulator (206) is a volume controller.

7. Method of controlling a transaction terminal (102) according to claim 2, the method comprising:
- a standby step (302),
- a step of switching to the NFC communication mode (304) with a mobile terminal (104) of the type comprising near field radio communication means (114), a microphone (116) and a transmission module (204) adapted to transmit the sound signals picked up by the microphone (116) to a called party,
- a step of switching to silent mode (306) in the course of which the transaction terminal (102) prevents the transmission of sound signals generated by the NFC transaction from the speaker (112) or limits the volume of the sound signals generated by the NFC transaction from the speaker (112),
- a transaction step (308),
- an end of transaction step (310), and
- a step of returning to normal mode (312).

8. Control method according to claim 7, wherein the transaction step (308) and the end of transaction step (310) are replaced by a time delay step.

9. Method of controlling the mobile terminal (104) according to one of claims 3 to 6, the method comprising:
- a standby step (402),
- a step of switching to the NFC communication mode (404) with a transaction terminal (102) comprising near field radio communication means (110) and a speaker (112),
- a step of switching to silent mode (406) in the course of which the mobile terminal (104) prevents the transmission, by the transmission module (204), to the called party, of sound signals generated by the NFC transaction from the speaker (112) and picked up by the microphone (116), or limits the volume of the sound signals generated by the NFC transaction from the speaker (112) picked up by the microphone (116) and transmitted by the transmission module (204) to the called party,
- a transaction step (408),
- an end of transaction step (410), and
- a step of returning to normal mode (412).

10. Control method according to claim 9, wherein the transaction step (408) and the end of transaction step (410) are replaced by a time delay step.

11. Control method according to claim 10, **characterised in that** the duration of the time delay is regulated by the user through an option on the mobile terminal (104).

## Patentansprüche

1. Transaktionssystem zur Nahfeldfunkübertragung (Near Field Communication: NFC) (100), aufweisend:
- Ein Transaktionsterminal (102), ,mit Nahfeldfunkübertragungsmitteln (110) und einem Lautsprecher (112),
- Ein Mobilterminal (104), mit Nahfeldfunkkommunikationsmitteln (114), ein Mikrophon (116) und einem Emissionsmodul (204), zum Übermitteln der durch das Mikrophon (116) aufgenommenen akustischen Signale an einen Teilnehmer,
wobei das Transaktionssystem zur Nahfeldfunkübertragung (100) **dadurch gekennzeichnet ist, dass**
das Transaktionsterminal (102) bei einer NFC-Transaktion zwischen dem Transaktionsterminal (102) und dem Mobilterminal (104) dazu ausgelegt ist,
- das Aussenden von akustischen Signalen, die durch die NFC-Transaktion mittels des Lautsprechers (112) erzeugt werden, zu verhindern, oder
- die Lautstärke der akustischen Signale, die durch die NFC-Transaktion mittels des Lautsprechers (112) erzeugt werden, zu begrenzen, und/oder
das Mobilterminal (104) dazu ausgelegt ist,
- die an den Teilnehmer gerichtete, durch das Emissionsmodul (204) erzeugte Emission der akustischen Signale, die durch die NFC-Transaktion mittels des Lautsprechers (112) erzeugt werden und vom Mikrophon (116) erfasst werden, zu verhindern, oder
- die Lautstärke der akustischen Signale, die durch die NFC-Transaktion mittels des Lautsprechers (112) erzeugt werden, vom Mikrophon (116) erfasst werden, und durch das Emissionsmodul (204) an den Teilnehmer übermittelt werden, zu begrenzen.

2. Transaktionsterminal (102), mit einem Lautsprecher (112) und Nahfeldfunkübertragungsmitteln (110),
wobei das Transaktionsterminal (102) dazu ausgelegt ist, eine Nahfeldfunkkommunikation mit einem Mobilterminal (104) aufzunehmen, aufweisend Nahfeldfunkverbindungsmittel (114), ein Mikrophon (116) und ein Emissionsmodul (204), das dazu ausgelegt ist, die akustischen Signale, die durch das Mikrophon (116) erfasst werden, an einen Teilnehmer zu übermitteln,
wobei das Transaktionsterminal (102) **dadurch gekennzeichnet ist, dass** es Begrenzungsmittel (108) aufweist, die bei einer NFC-Transaktion mit einem Mobilterminal (104) dazu ausgelegt sind, die Emission von akustischen Signalen, die durch die NFC-Transaktion mittels des Lautsprechers (112) erzeugt werden, zu verhindern, oder die Lautstärke der akustischen Signale, die durch die NFC-Transaktion mittels des Lautsprechers (112) erzeugt werden, zu begrenzen.

3. Mobilterminal (104), mit Nahfeldfunkübertragungsmitteln (114), einem Mikrophon (116) und einem Emissionsmodul (204), ausgelegt zum Übermitteln der akustischen Signale, die durch das Mikrophon (116) erfasst werden, an einen Teilnehmer,
wobei das Mobilterminal (104) dazu ausgelegt ist, eine Nahfeldfunkverbindung mit einem Transaktionsterminal (102) aufzunehmen, aufweisend Nahfeldfunkübertragungsmittel (110) und einen Lautsprecher (112),
wobei das Mobilterminal (104) **dadurch gekennzeichnet ist, dass** es Begrenzungsmittel (202, 206) aufweist, die bei einer NFC-Transaktion mit dem Transaktionsterminal (102) dazu ausgelegt sind, die an den Teilnehmer gerichtete, durch das Emissionsmodul (204) erzeugte Emission der akustischen Signale, die durch die NFC-Transaktion mittels des Lautsprechers (112) erzeugt werden und durch das Mikrophon (116) erfasst werden, zu verhindern, oder die Lautstärke der akustischen Signale, die durch die NFC-Transaktion mittels des Lautsprechers (112) erzeugt werden, durch das Mikrophon (116) erfasst werden und durch das Emissionsmodul (204) an den Teilnehmer übertragen werden, zu begrenzen.

4. Mobilterminal (104) gemäß Anspruch 3, **dadurch gekennzeichnet, dass** die Begrenzungsmittel ein Steuerungsmodul (202) und einen Lautstärkeregler (206), welcher zwischen dem Mikrophon (116) und dem Emissionsmodul (204) angeordnet ist und durch das Steuerungsmodul (202) gesteuert wird, aufweisen.

5. Mobilterminal (104) gemäß Anspruch 4, **dadurch gekennzeichnet, dass** der Lautstärkeregler (206) ein Schalter mit zwei Positionen ist.

6. Mobilterminal (104) gemäß Anspruch 4, **dadurch gekennzeichnet, dass** der Lautstärkeregler (206) ein Lautstärkedimmer ist.

7. Verfahren zur Steuerung eines Transaktionsterminals (102) gemäß Anspruch 2, aufweisend:
- einen Warteschritt (302),
- einen Schritt zum Wechseln in einen NFC-Kommunikationsmodus (304) mit einem Mobilterminal (104), welches Nahfeldfunkübertragungsmittel (114), ein Mikrophon (116) und ein Emissionsmodul (204), ausgelegt zum Übertragen von akustischen, durch das Mikrophon (116) erfassten Signalen an einen Teilnehmer, aufweist,
- einen Schritt zum Wechseln in einen Lautlosmodus (306), während dem das Transaktionsterminal (102) die Ausgabe von akustischen Signalen, die durch die NFC-Transaktion mittels des Lautsprechers (112) erzeugt werden, verhindert, oder die Lautstärke der akustischen Signale, die durch die NFC-Transaktion mittels des Lautsprechers (112) erzeugt werden, begrenzt,
- einen Transaktionsschritt (308),
- einen Schritt zum Beenden der Transaktion (310), und
- einen Schritt zum Zurückkehren in den Normalmodus (312).

8. Steuerungsverfahren gemäß Anspruch 7, bei dem der Transaktionsschritt (308) und der Schritt zum Beenden der Transaktion (310) durch einen Verzögerungsschritt ersetzt werden.

9. Verfahren zum Steuern des Mobilterminals (104) gemäß einen der Ansprüche 3 bis 6, wobei das Verfahren ausweist:
- einen Warteschritt (402),
- einen Schritt zum Wechseln in einen NFC-Kommunikationsmodus (104) mit einem Transaktionsterminal (102), aufweisend Nahfeldfunkübertragungsmittel (110) und ein Lautsprecher (112),
- einen Schritt zum Wechseln in einen Lautlosmodus (406), während dem das Mobilterminal (104) eine an den Teilnehmer gerichtete, durch das Emissionsmodul (204) erzeugte Emission der akustischen Signale, die durch die NFC-Transaktion mittels des Lautsprechers (112) erzeugt werden, und durch das Mikrophon (116) erfasst werden, verhindert, oder die Lautstärke der akustischen Signale, die durch die NFC-Transaktion mittels des Lautsprechers (112) erzeugt werden, durch das Mikrophon (116) erfasst werden, und durch das Emissionsmodul (204) an den Teilnehmer übertragen werden, begrenzt,
- einen Übertragungsschritt (408),
- einen Schritt zum Beenden der Transaktion (410), und
- einen Schritt zum Zurückkehren in den Normalmodus (412).

10. Steuerungsverfahren gemäß Anspruch 9, bei dem der Transaktionsschritt (408) und der Schritt zum Beenden der Transaktion (410) durch einen Verzögerungsschritt ersetzt werden.

11. Steuerungsverfahren gemäß Anspruch 10, **dadurch gekennzeichnet, dass** die Verzögerungsdauer durch den Benutzer mittels einer Option des Mobilterminals (104) geregelt wird.
